# EUROPEAN PATENT SPECIFICATION

(11) **EP 0 819 611 B1**
(45) Date of publication and mention of the grant of the patent: **05.04.2000**
(21) Application number: 97304990.1
(22) Date of filing: 08.07.1997
(51) Int. Cl.: B65B 61/18, B31B 1/84

(54) **Container fitment application**
Verfahren und Vorrichtung zum Anbringen von Ausgiesseinrichtungen an Behältern
Procédé et dispositif pour attacher des becs verseurs à des conteneurs

(30) Priority: 16.07.1996 US 680901
(43) Date of publication of application: 21.01.1998
(60) Divisional application: 99116441.9
(73) Proprietor: ELOPAK SYSTEMS AG, 8152 Glattbrugg (CH)
(72) Inventor: Kucera, Mark Robert, Walled Lake, Michigan 48390 (US); Owen, Barry Charles, Southfields,Michigan 48076 (US); Rogalski, Edward M., Muscatine, Iowa 52761 (US)
(74) Representative: Burrows, Anthony Gregory

(56) References cited:
- WO-A-95/10408
- WO-A-96/10515
- US-A- 3 812 572
- US-A- 5 473 857
- US-A- 5 484 374

## Description

This invention relates generally to apparatus including a container fitment applicator, especially to such applicators for use on carton forming, filling and sealing machines and, more particularly, to such machines in which pour spout fitments are applied while the cartons are being processed thereon.

Forming, filling and sealing machines having pour spout applicators at one of the stations therealong are known. For example, GB-A-2,238,287 discloses an application station at which a rotatable mandrel or bar is provided, with the mandrel having two bosses projecting therefrom. Shortly after one of the bosses has delivered a pouring spout to an opening through a panel of an open top of a carton, the other of the bosses takes a pouring spout from a spout-conveying arrangement, and vice-versa. In more detail, as a carton is indexed into the application station, the mandrel is rotated in the direction of the carton travel into the open top of the carton, aligning the spout-carrying boss with the opening formed in the selected panel of the top closure of the carton; the boss and pouring spout are moved laterally into the opening; the inner flanged end of the pouring spout is secured, such as by ultrasonic welding, to the inner wall around the opening; and the boss is withdrawn from the opening and then rotated out of the open top. An outer cap is attached to the pouring spout before assembly.

US-A-5,484,374 discloses an apparatus in accordance with the preamble of claim 1 and comprising an applicator including a rotatable and translatable anvil having three (or more or fewer) radially extending arms. A mandrel on one arm frictionally engages a pour spout fitment simultaneously with a second mandrel inserting a fitment into a container hole. The applicator relies upon the friction between the interior surface of the fitment and the closely-fitting first mandrel to overcome suction imparted through an aperture in an escapement holding the fitment to withdraw the fitment from the escapement. An ultrasonic sealer vibrates the container wall against the anvil to weld the fitment to the container. The applicator applies one fitment to one container at a time.

Other pouring spout applicators are disclosed in US-A-4,788,811 and US-A-4,386,923. US-A-4,788,811 discloses a horizontally elongated pour spout fitment attaching turret at a location upstream of the usual turret and radial mandrels on which the bottom end closure is folded and sealed. The fitment attaching turret includes a pusher at one station for pushing an open-ended package onto a sucker device holding and inserting a pour spout fitment into an opening in a package top panel. The fitment attaching turret is then rotated to a second station where an anvil is axially inserted into the package, co-operable with an ultrasonic horn for sealing a flange of the fitment to the inner surface of the top panel.

US-A-4,386,923 discloses a bag-in-box arrangement wherein a fitment is attached to the bag which is then inserted through a hole in a flap of the box, while both are in the collapsed or blank state.

Each of US-A-5,267,934 and US-A-5,435,803 discloses pour spout fitment applicators wherein the fitment is applied from within the carton, outwardly through an opening therein.

According to one aspect of the present invention, there is provided apparatus for use in applying fitments to respective containers, comprising an applicator comprising a plurality of arms distributed round an axis, each arm having in a distal end zone thereof receiving means adapted to receive a fitment, and driving means for rotating said applicator so as angularly to position each arm to receive a fitment and later angularly to position the arm ready for applying of the fitment to the container, characterized in that said arms comprise first, second, third and fourth arms, and said driving means is arranged to rotate said applicator so as angularly to position the first and second arms carrying respective first and second fitments ready for concurrent applying of the first and second fitments to respective first and second containers and so as angularly to position the third and fourth arms to receive respective third and fourth fitments.

According to another aspect of the present invention, there is provided a method of applying fitments to containers, comprising turning an applicator including a plurality of arms so as to bring receiving means of one of the arms to a receiving position to receive a fitment, causing the receiving means to receive the fitment, further turning the applicator to bring the receiving means and thus the fitment to a delivering position to deliver the fitment, and applying the delivered fitment to a container, characterized in that the further turning of the applicator brings first and second receiving means of first and second arms of the applicator to respective delivering positions for first and second fitments and brings third and fourth receiving means of third and fourth arms of the applicator to respective receiving positions for third and fourth fitments, the first and second fitments are applied concurrently to first and second containers, and the third and fourth fitments are received by the third and fourth receiving means.

Owing to these aspects of the invention, it is possible to provide improved application of fitments to containers on a packaging machine, particularly a carton forming, filling and sealing machine, on which containers are indexed in groups.

The invention is particularly applicable to circumstances where containers aligned with the applicator are closely arrayed.

Advantageously, the apparatus includes placing means for engaging the third and fourth fitments and moving them from respective tracks to the third and fourth arms.

Advantageously, in the method the third and fourth fitments are placed on respective receiving means of the third and forth arms by moving the third and fourth fitments onto those receiving means.

In this way, it is possible to place the fitments positively on the receiving means and so ensure that the fitments are reliably and correctly received by the applicator.

In a preferred embodiment, the apparatus includes a four-armed pour spout fitment applicator which rotates two of its arms into open-topped cartons and applies two flanged pour spout fitments outwardly through openings in a pair of top panels of a pair of adjacent cartons, while its other two arms are positioned to receive two other fitments. A pair of pneumatic piston-and-cylinder devices serve to transport the two other fitments to the other two arms and positively place the same thereon. An external ultrasonic sealer includes a horn which serves to engage the outer panel surfaces to seal the flanges of the fitments to the inner surfaces of the top panels around the openings while the pair of piston-and-cylinder devices are being actuated.

In order that the invention may be clearly understood and readily carried into effect, reference will now be made, by way of example, to the accompanying drawings, in which:-
Figure 1 is a side elevation of a double indexing, forming, filling and sealing machine;
Figure 2 is an enlarged side elevation of a pour spout fitment application station of the machine;
Figure 3 is a schematic, side elevational representation of fifteen operational stages at the station;

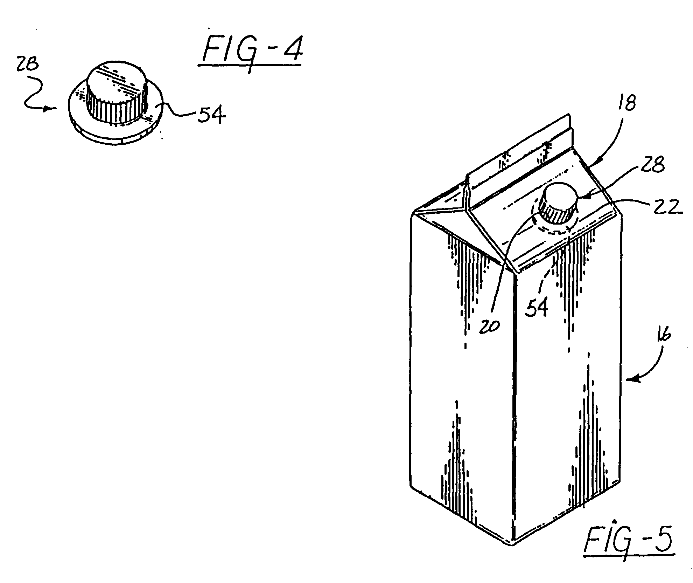

Figure 4 is a perspective view of a pour spout fitment applicable at the station; and
Figure 5 is a perspective view of a package produced by the machine.

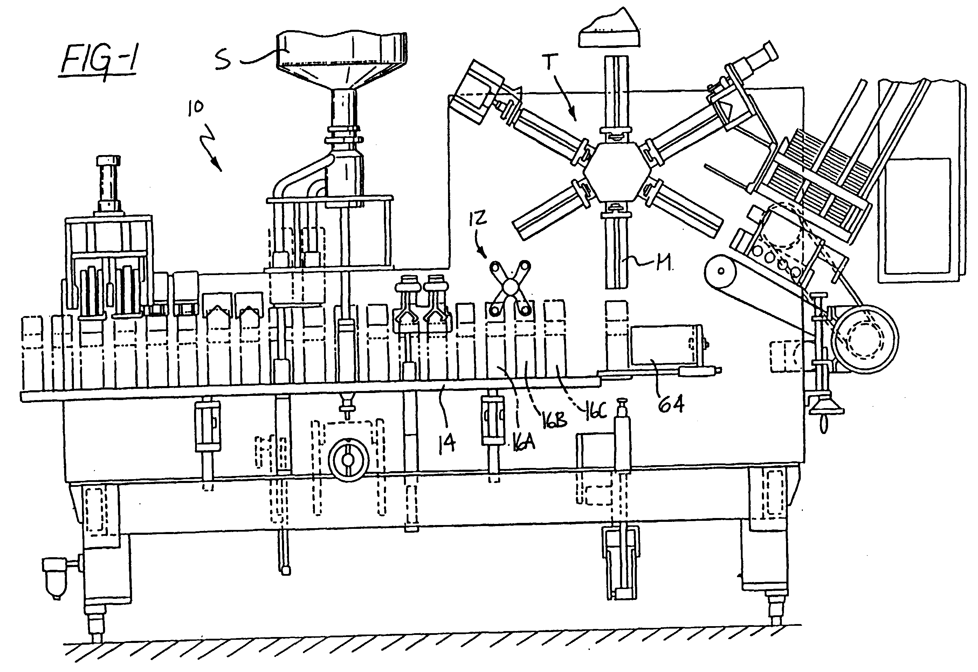

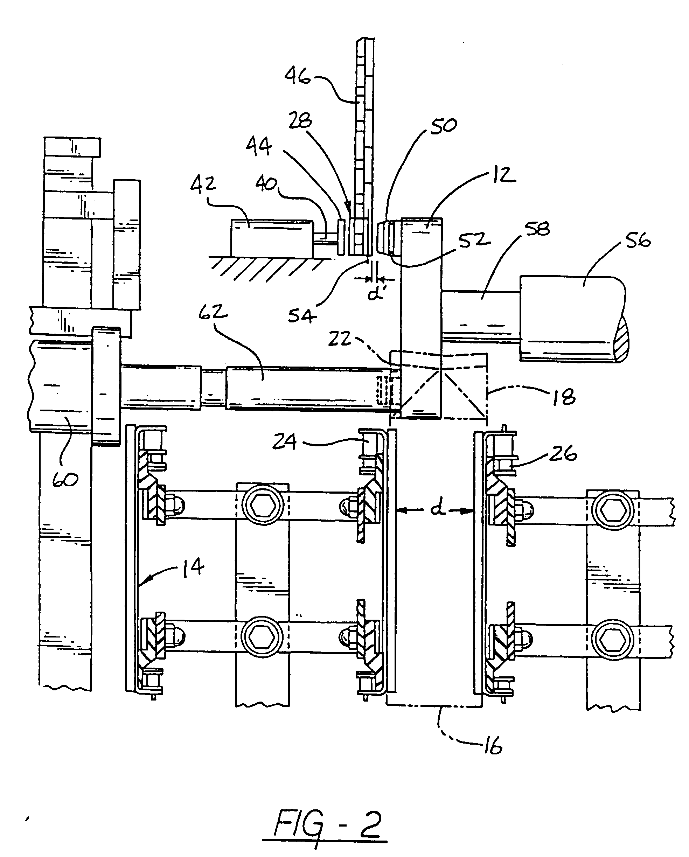

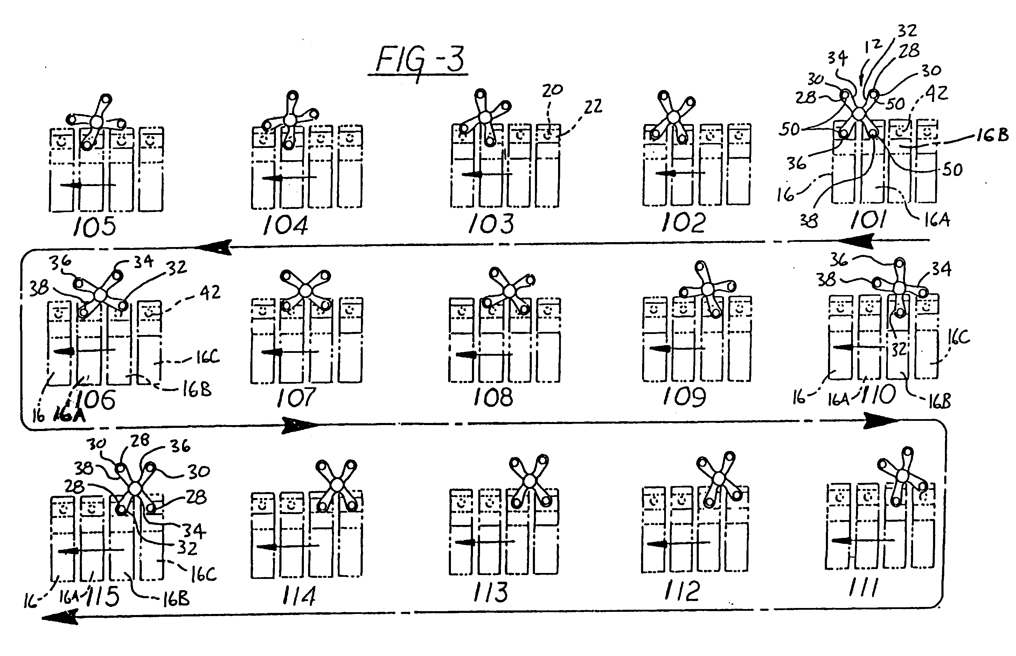

Referring to the drawings, Figures 1 and 2 illustrate a forming, filling and sealing machine 10 embodying a pour spout fitment applicator 12, and including a conveyor 14 carrying thermoplastics-coated cartons 16 having open top closures 18. An opening 20 (see Figures 3 and 5) is formed in a selected panel 22 of each end closure 18. The applicator 12 is mounted on the machine 10 intermediate the usual indexable turret mechanism T including a plurality of mandrels M and a filling station including a source S of a selected liquid product.

As shown in Figure 2, the conveyor 14 comprises two endless chains 24 and 26 spaced a predetermined distance d apart, within which a series of closely spaced-apart cartons 16 are carried, with the panel 22 bearing the opening 20 facing toward one chain 24.

As seen in Figure 3, the pour spout fitment applicator 12 is positioned to receive two pour spout fitments 28 at a time on its two exposed arms 32 and 34 at stage 101, while two fitments on its two inner arms 36 and 38 are positioned for placement, as will be explained, into two top panels 22 of adjacent cartons 16 and 16a during a dwell while being conveyed by the double indexing conveyor 14 (Figure 2). As the conveyor 14 moves through stages 102 to 106, the arm 32 will rotate toward and into carton 16B. During further movement of the conveyor 14 through stages 107 to 110, the arm 34 rotates into carton 16C. During further movement through stages 111 to 115, the arms 32 and 34 will become aligned with the openings 20 in the top panels 22 of the cartons 16B and 16C for placement of two fitments 28 therein, with the arms 36 and 38 now being in the location for receiving two more fitments 28 for the next cycle.

As shown in Figure 3, the arm 32 has rotated through 180° for the cycle from stage 101 to stage 115. Its next 180° rotation will bring the arm 32 back to the stage 101 position, to receive its next pour spout fitment 28. It has been determined, in the example shown, that each carton 16 has indexed through a distance of 7.0 inches (17.78cm.) for a quart processing machine, or 9.0 inches (22.86cm.) for a half-gallon processing machine, in moving from stage 101 to stage 115, along the conveyor 14.

Referring once again to Figure 2, each of two tracks 46 in the form of chutes presents a pour spout fitment 28 at a spacing d' from an aligned, extension-type receiver or spigot 50 of one of the arms of the applicator 12. A piston 40 of a suitable, pneumatic, piston-and-cylinder device 42, having a flanged end 44, which, for some fitment sizes, may include a cylindrical shape for surrounding the fitment 28, serves to push each end fitment from the track 46 onto the spigot 50 of the applicator arm. Each spigot 50 has an elastomeric ring 52 therearound which will assume an interference fit in the inner periphery of the flanged end of the fitment 28.

Each track 46 extends vertically downwardly at the end thereof to terminate adjacent the applicator 12 and is adapted to hold a row of pour spout fitments 28, each having a flange 54 thereon slidably aligned end-to-end in the track, as received from suitable external loading means. Such loading means may include a vibratory parts feeder (not shown), known to have been available from Syntron Co., Homer City, State of Pennsylvania, United States of America. Such a parts feeder automatically orients a load of flanged fitments 28 and feeds them in their oriented attitude to each track 46. A pair of tracks may extend from one parts feeder bowl, or from a pair of feeder bowls.

The flange 54 of the fitment 28 is confined within the edges of the track 46, illustrated diagrammatically in Figure 2, and is snapped outwardly therefrom upon the fitment being pushed by the flanged end 44 of the piston 40.

A drive unit, represented as 56, is connected by a shaft 58 to the centre of the applicator 12. The drive unit 56 is adapted to reciprocate the applicator 12 within the distance d, and to rotate the applicator through repeated 180° cycles shown in Figure 3.

While moving laterally to place two fitments 28 into two openings 20 in two adjacent panels 22 from the arms 36 and 38, the two arms 32 and 34 extend toward two other fitments 28 in the two adjacent tracks 46, stopping the distance d' away therefrom to await the conveyance of the fitments by the pistons 40 and ends 44.

The application station includes two ultrasonic sealers 60 (Figure 2), each including a retractable horn 62 having an axis aligned with the opening 20 through the panel 22. As the applicator 12 places the two fitments 28 into two openings 20, the two vibrating horns 62 engage the outer surfaces of the two panels 22, opposite the flanges 54, thereby to bond the flanges to the inner surfaces of the two panels. While the bonding process is being accomplished, the ends 44 engage the two adjacent fitments 28 and convey them across the spacing d' and slide them onto the two spigots 50.

The horns 62 and the applicator 12 then retract to begin the next cycle.

It should be apparent that there has been described with reference to the drawings an improved carton pour spout fitment applicator that is co-operable with a double indexing conveyor of a high-production, forming, filling and sealing machine.

It should be further apparent that, for a machine which indexes closely arrayed cartons two at a time along one path, only one applicator is employed to serve two adjacent cartons. For such a machine, there would be a dual-mandrel turret, or a single-mandrel turret and a single-to-dual indexing carton transfer mechanism 64 as shown in Figure 1, and as disclosed in US-A-4,456,118, with, of course, downstream multiple breakers, fillers, folders and sealers.

It should be still further apparent that the placing means 40-44 positively applies pour spout fitments to spigots, in contrast to an applicator which depends upon only a friction fit of a spigot first to insert into and then to pull a fitment from a stationary escapement.

## Claims

1. Apparatus for use in applying fitments to respective containers, comprising an applicator (12) comprising a plurality of arms (32-38) distributed round an axis (58), each arm (32-38) having in a distal end zone thereof receiving means (50) adapted to receive a fitment (28), and driving means (56) for rotating said applicator (12) so as angularly to position each arm (32-38) to receive a fitment (28) and later angularly to position the arm (32-38) ready for applying of the fitment (28) to the container (16), characterized in that said arms (32-38) comprise first, second, third and fourth arms (32-38), and said driving means (56) is arranged to rotate said applicator (12) so as angularly to position the first and second arms (32,34) carrying respective first and second fitments (28) ready for concurrent applying of the first and second fitments (28) to respective first and second containers (16B,16C) and so as angularly to position the third and fourth arms (36,38) to receive respective third and fourth fitments (28).

2. Apparatus according to claim 1, wherein said driving means (56) serves also to reciprocate said applicator (12) to apply said first and second fitments (28) concurrently to said first and second containers (16B,16C).

3. Apparatus according to claim 1 or 2, and further comprising fixing means (62) for fixing said first and second fitments (28) concurrently to said first and second containers (16B,16C), respectively.

4. Apparatus according to claim 3, wherein said fixing means (62) comprises ultrasonic means (62) for bearing on an outer surface around each of said first and second fitments (28) to bond respective flanges (54) of said first and second fitments (28) concurrently to the first and second containers (16B,16C).

5. Apparatus according to any preceding claim, and further comprising placing means (40-44) for placing said third and fourth fitments (28) onto the receiving means (50) of said third and fourth arms (36,38).

6. Apparatus according to claim 5, wherein said placing means (40-44) comprises fixed cylinders (42) each having a reciprocal piston (40) for alignment with a corresponding receiving means (50).

7. Apparatus according to claim 5 or 6 as appended to claim 3, wherein said placing means (40-44) is arranged to displace said third and fourth fitments (28) to said third and fourth arms (36,38) in a timed relationship with the fixing of said first and second fitments (28) to said first and second containers (16B,16C).

8. A method of applying fitments to containers, comprising turning an applicator (12) including a plurality of arms (32-38) so as to bring receiving means (50) of one of the arms (32-38) to a receiving position to receive a fitment (28), causing the receiving means (50) to receive the fitment (28), further turning the applicator (12) to bring the receiving means (50) and thus the fitment (28) to a delivering position to deliver the fitment (28), and applying the delivered fitment (28) to a container (16), characterized in that the further turning of the applicator (12) brings first and second receiving means (50) of first and second arms (32,34) of the applicator (12) to respective delivering positions for first and second fitments (28) and brings third and fourth receiving means (50) of third and fourth arms (36,38) of the applicator (12) to respective receiving positions for third and fourth fitments (28), the first and second fitments (28) are applied concurrently to first and second containers (16B,16C), and the third and fourth fitments (28) are received by the third and fourth receiving means (50).

9. A method according to claim 8, and further comprising reciprocating said applicator (12) in order to apply said first and second fitments (28) as aforesaid.

10. A method according to claim 8 or 9, and further comprising, after applying said first and second fitments (28) as aforesaid, fixing said first and second fitments (28) concurrently to said first and second containers (16B,16C).

11. A method according to claim 10, wherein said third and fourth fitments (28) are received on said third and fourth receiving means (50) as aforesaid concurrently with said fixing.

12. A method according to any one of claims 8 to 11, wherein said first and second arms (32,34) turn into open tops of the first and second containers (16B,16C), and said third and fourth arms (36,38) turn into open tops of third and fourth containers (16,16A).

## Patentansprüche

1. Vorrichtung zum Anbringen von Zusatzteilen an Behältern mit einem Applikator (12) mit mehreren Armen (32 - 38), die um eine Achse (58) herum verteilt sind, wobei jeder Arm (32 - 38) in einer distalen Endzone eine Aufnahmevorrichtung (50) aufweist, die ein Zusatzteil (28) aufnimmt, und eine Antriebsvorrichtung (56), die den Applikator (12) derart dreht, daß jeder Arm (32 - 38) in eine Winkelposition zur Aufnahme eines Zusatzteils (28) gebracht wird und später der Arm (32 - 38) in eine für das Anbringen des Zusatzteils (28) an dem Behälterteil (16) geeignete Winkelposition gebracht wird,
**dadurch gekennzeichnet**, daß
die Arme (32 - 38) einen ersten, einen zweiten, einen dritten und einen vierten Arm (32 - 38) aufweisen und die Antriebsvorrichtung (56) den Applikator (12) derart dreht, daß der erste und der zweite Arm (32, 34), die das jeweilige erste und zweite Zusatzteil (28) tragen, in eine für das gleichzeitige Anbringen des ersten und des zweiten Zusatzteils (28) an einem jeweiligen ersten und zweiten Behälterteil (16B, 16C) geeignete Winkelposition gebracht werden, und daß der dritte und der vierte Arm (36, 38) in eine Winkelposition zur Aufnahme von jeweiligen dritten und vierten Zusatzteilen (28) gebracht werden.

2. Vorrichtung nach Anspruch 1, bei der die Antriebsvorrichtung (56) auch zum Hin- und Herbewegen des Applikators (12) zum gleichzeitigen Anbringen des ersten und des zweiten Zusatzteils (28) an dem ersten und dem zweiten Behälterteil (16B, 16C) dient.

3. Vorrichtung nach Anspruch 1 oder 2, ferner mit einer Befestigungsvorrichtung (62) zum gleichzeitigen Befestigen des ersten und des zweiten Zusatzteils (28) an dem ersten bzw. dem zweiten Behälterteil (16B, 16C).

4. Vorrichtung nach Anspruch 3, bei der die Befestigungsvorrichtung (62) eine Ultraschallvorrichtung (62) zur Anwendung an einer Außenfläche um das erste und das zweite Zusatzteil (28) zwecks gleichzeitigen Verbindens der jeweiligen Flansche (54) des ersten und des zweiten Zusatzteils (28) mit dem ersten und dem zweiten Behälterteil (16B, 16C) aufweist.

5. Vorrichtung nach einem der vorhergehenden Ansprüche, ferner mit einer Plaziervorrichtung (40 - 44) zum Plazieren des dritten und des vierten Zusatzteils (28) in der Aufnahmevorrichtung (50) des dritten und des vierten Arms (36, 38).

6. Vorrichtung nach Anspruch 5, bei der die Plaziervorrichtung (40 - 44) feststehende Zylinder (42) aufweist, die jeweils mit einem hin- und hergehenden Kolben zum Ausrichten mit der Aufnahmevorrichtung (50) versehen sind.

7. Vorrichtung nach Anspruch 5 oder 6 in Verbindung mit Anspruch 3, bei der die Plaziervorrichtung (40 - 44) das dritte und das vierte Zusatzteil (28) in einer zeitlichen Beziehung mit dem Befestigen des ersten und des zweiten Zusatzteils (28) an dem ersten und dem zweiten Behälterteil (16B, 16C) auf den dritten und den vierten Arm (36, 38) verschiebt.

8. Verfahren zum Anbringen von Zusatzteilen an Behältern, bei dem ein Applikator (12) mit mehreren Armen (32 - 38) derart gedreht wird, daß die Aufnahmevorrichtung (50) eines der Arme (32 - 38) in eine Aufnahmeposition zum Aufnehmen eines Zusatzteils (28) gebracht wird, so daß die Aufnahmevorrichtung (50) das Zusatzteil (28) äufnimmt, ferner der Applikator (12) derart gedreht wird, daß die Aufnahmevorrichtung (50) und somit das Zusatzteil (28) in eine Abgabeposition zur Abgabe des Zusatzteils (28) gebracht wird, und das abgebene Zusatzteil (28) an einem Behälterteil (16) angebracht wird,
**dadurch gekennzeichnet**, daß
das Weiterdrehen des Applikators (12) die erste und die zweite Aufnahmevorrichtung (50) des ersten und des zweiten Arms (32, 34) des Applikators (12) in die jeweiligen Abgabepositionen für das erste und das zweite Zusatzteil (28) bringt, und die dritte und die vierte Aufnahmevorrichtung (50) des dritten und des vierten Arms (36, 38) des Applikators (12) in die jeweiligen Aufnahmepositionen für das dritte und das vierte Zusatzteil (28) bringt, wobei das erste und das zweite Zusatzteil (28) gleichzeitig an dem ersten und dem zweiten Behälterteil (16B, 16C) angebracht werden und das dritte und das vierte Zusatzteil (28) von der dritten und der vierten Aufnahmevorrichtung (50) aufgenommen werden.

9. Verfahren nach Anspruch 8, bei dem ferner, wie oben beschrieben, der Applikator (12) zum Anbringen des ersten und des zweiten Zusatzteils (28) hin- und herbewegt wird.

10. Verfahren nach Anspruch 8 oder 9, bei dem ferner nach dem Anbringen des ersten und des zweiten Zusatzteils (28) wie oben beschrieben das erste und das zweite Zusatzteil (28) gleichzeitig an dem ersten und dem zweiten Behälterteil (16B, 16C) befestigt werden.

11. Verfahren nach Anspruch 10, bei dem das dritte und das vierte Zusatzteil (28) wie oben beschrieben gleichzeitig mit dem Befestigen in der dritten und der vierten Aufnahmevorrichtung (50) aufgenommen werden.

12. Verfahren nach einem der Ansprüche 8 bis 11, bei dem der erste und der zweite Arm (32, 34) derart gedreht werden, daß die Oberteile des ersten und des zweiten Behälterteils (16B, 16C) offen sind, und der dritte und der vierte Arm (36, 38) derart gedreht werden, daß der dritte und der vierte Behälterteil (16, 16A) offen sind.

## Revendications

1. Dispositif utilisable pour appliquer des supports d'accessoires à des récipients respectifs, comportant un applicateur (12) comprenant une pluralité de bras (32-38) répartis autour d'un axe (58), chaque bras (32-38) présentant, dans sa zone d'extrémité distale, des moyens de réception (50) adaptés à recevoir un support d'accessoire (28) et des moyens d'entraînement (56) pour faire tourner ledit applicateur (12) afin de mettre en place angulairement chaque bras (32-38) pour recevoir un support d'accessoire (28) et pour mettre ensuite en place angulairement le bras (32-38) prêt pour l'application du support d'accessoire (28) au récipient (16), caractérisé en ce que lesdits bras (32-38) comprennent de premier, second, troisième et quatrième bras (32-38), et lesdits moyens d'entraînement (56) sont disposés pour faire tourner ledit applicateur (12) de manière à mettre en place angulairement les premier et second bras (32, 34) portant de premier et second supports d'accessoires respectifs (28) prêts pour une application concomitante des premier et second supports d'accessoires (28) à de premier et second récipients respectifs (16B, 16C) et de manière à mettre en place angulairement les troisième et quatrième bras (36, 38) pour recevoir de troisième et quatrième supports d'accessoires (28).

2. Dispositif selon la revendication 1, dans lequel lesdits moyens d'entraînement (56) servent également à déplacer en va-et-vient ledit applicateur (12) pour appliquer lesdits premier et second supports d'accessoires (28) de manière concomitante auxdits premier et second récipients (16B, 16C).

3. Dispositif selon la revendication 1 ou 2, et comprenant en outre des moyens de fixation (62) pour fixer lesdits premier et second supports d'accessoires (28) de manière concomitante respectivement auxdits premier et second récipients (16B, 16C).

4. Dispositif selon la revendication 3, dans lequel lesdits moyens de fixation (62) comprennent des moyens à ultrasons (62) prévus pour porter sur une surface externe autour de chacun desdits premier et second supports d'accessoires (28) afin de relier des brides respectives (54) desdits premier et second supports d'accessoires (28) de manière concomitante aux premier et second récipients (16B, 16C).

5. Dispositif selon une revendication précédente quelconque, et comprenant en outre des moyens de placement (40-44) pour placer lesdits troisième et quatrième supports d'accessoires (28) sur les moyens de réception (50) desdits troisième et quatrième bras (36,38).

6. Dispositif selon la revendication 5, dans lequel lesdits moyens de placement (40-44) comprennent des vérins fixes (42) présentant chacun un piston animé d'un mouvement de va-et-vient (40) en vue d'un alignement avec un moyen de réception correspondant (50).

7. Dispositif selon la revendication 5 ou 6 dans sa dépendance de la revendication 3, dans lequel lesdits moyens de placement (40-44) sont prévus pour déplacer lesdits troisième et quatrième supports d'accessoires (28) vers lesdits troisième et quatrième bras (36, 38) dans une relation synchronisée avec la fixation des premier et second supports d'accessoires (28) sur lesdits premier et second récipients (16B, 16C).

8. Un procédé d'application de supports d'accessoires à des récipients, comportant les opérations consistant à faire tourner un applicateur (12) comprenant une pluralité de bras (32-38) de manière à amener des moyens de réception (50) d'un des bras (32-38) à une position de réception pour recevoir un support d'accessoire (28), à amener les moyens de réception (50) à recevoir le support d'accessoire (28), à faire tourner davantage l'applicateur (12) pour amener les moyens de réception (50) et donc le support d'accessoire (28) à une position de décharge pour décharger le support d'accessoire (28), et appliquer, à un récipient (16), le support d'accessoire (28) ainsi déchargé, caractérisé en ce que l'opération consistant à faire tourner davantage l'applicateur (12) amène de premier et second moyens de réception (50) de premier et second bras (32, 34) de l'applicateur (12) à des positions de décharge respectives pour de premier et second supports d'accessoires (28) et amène de troisième et quatrième moyens de réception (50) de troisième et quatrième bras (36, 38) de l'applicateur (12) à des positions de réception respectives pour de troisième et quatrième supports d'accessoires (28), les premier et second supports d'accessoires (28) sont appliqués de manière concomitante à de premier et second récipients (16B, 16C), et les troisième et quatrième supports d'accessoire (28) sont reçus par les troisième et quatrième moyens de réception (50).

9. Un procédé selon la revendication 8 et comprenant en outre l'opération consistant à déplacer en va-et-vient ledit applicateur (12) de manière à appliquer lesdits premier et second supports d'accessoire (28) comme indiqué plus haut.

10. Un procédé selon la revendication 8 ou 9, et comprenant en outre, après avoir appliqué lesdits premier et second supports d'accessoire (28) comme indiqué plus haut, l'opération consistant à fixer lesdits premier et second supports d'accessoire (28) de manière concomitante sur lesdits premier et second récipients (16B, 16C).

11. Un procédé selon la revendication 10, dans lequel lesdits troisième et quatrième supports d'accessoires (28) sont reçus sur lesdits troisième et quatrième moyens de réception (50) comme indiqué plus haut de manière concomitante avec ladite opération de fixation.

12. Un procédé selon l'une quelconque des revendications 8 à 11, dans lequel lesdits premier et second bras (32, 34) tournent dans des parties supérieures ouvertes des premier et second récipients (16B, 16C), et lesdits troisième et quatrième bras (36, 38) tournent dans des parties supérieures ouvertes des troisième et quatrième récipients (16, 16A).
